# EUROPÄISCHE PATENTSCHRIFT

(11) **EP 1 424 588 B1**
(45) Veröffentlichungstag und Bekanntmachung des Hinweises auf die Patenterteilung: **29.08.2007**
(21) Anmeldenummer: 03024831.4
(22) Anmeldetag: 31.10.2003
(51) Int. Cl.: G02C 5/22

(54) **Gelenk für eine Brillenfassung**
Hinge for spectacles
Charnière pour lunettes

(30) Priorität: 28.11.2002 DE 10255780
(43) Veröffentlichungstag der Anmeldung: 02.06.2004
(73) Patentinhaber: Rodenstock GmbH, 80469 München (DE)
(72) Erfinder: Wandinger, Jakob, 84478 Waldkraiburg (DE)

(56) Entgegenhaltungen:
- WO-A-95/19586
- WO-A-03/034128
- DE-A- 3 727 706
- DE-A- 19 630 445
- DE-B- 1 143 344
- US-B1- 6 332 682

## Beschreibung

Die Erfindung betrifft Gelenk für eine Brillenfassung mit zwei Gelenkhälften mit jeweils einer Lauffläche, die normal auf die Gelenkachse steht, sowie einer Schraube zur Montage und Einstellung eines definierten Reibmoments, wobei die Laufflächen der Gelenkhälften so ausgebildet sind, dass die radiale Positionierung der Gelenkhälften durch einen ringteilförmigen Formschluss erfolgt.

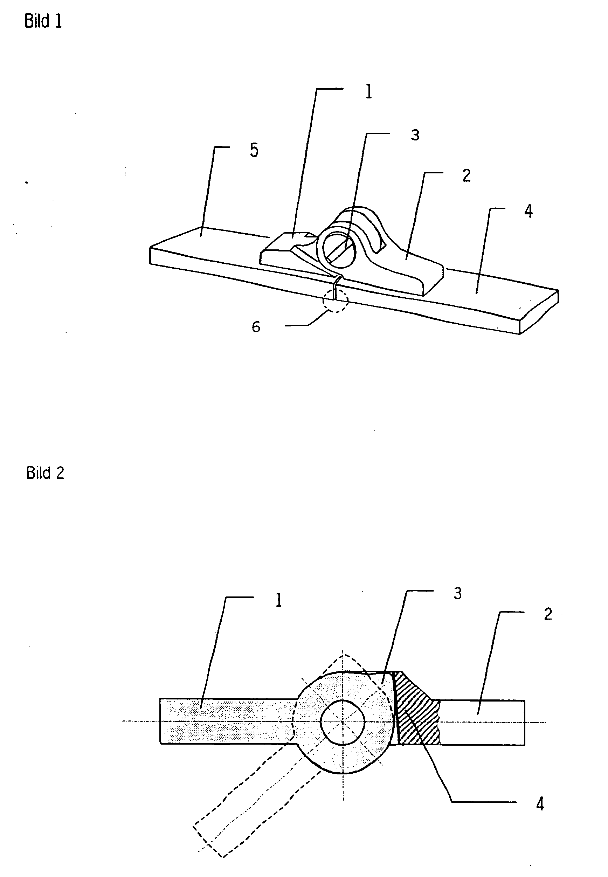

Wie in Bild 1 dargestellt, ist es allgemein üblich, Gelenke für Brillenfassungen in Form einer einlappigen (1) und zweilappigen Hälfte (2) auszubilden und diese mit Hilfe einer Schaftschraube (3) als Achse zu verbinden. Die Begrenzung des Aufschlagwinkels erfolgt durch Anschlag der beiden schwenkbar zu verbindenden Bauteile (4) und (5) im Bereich (6) oder bei entsprechender geometrischer Ausbildung der Gelenklappen im Gelenk selbst (Prinzipskizze siehe Bild 2).

Die Nocke (3) am einlappigen Gelenkteil (1) schlägt an die Fläche (4) zwischen den Lappen des zweilappigen Gelenkteils (2) an und begrenzt so den Öffnungswinkel. Der Nachteil bei beiden gebräuchlichen Anschlaglösungen (vor allem bei dünneren Lappen) besteht in hervorstehenden mehr oder weniger scharfen Kanten im eingeschlagenen Zustand der Bügel, die sich an Kleidungsstücken etc. verhaken und zu Beschädigungen führen können.

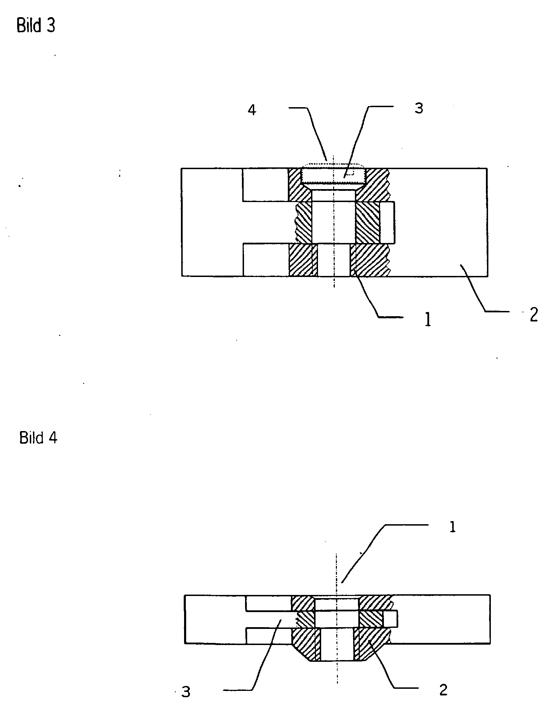

Wie aus der Darstellung durch die zusammengesteckten Gelenkhälften in Bild 3 hervorgeht, wird eine Schaftschraube in das Gewinde (1) in den einen Lappen des zweilappigen Gelenkteils (2) eingedreht. Je nach Ausführung verschwindet der Schraubenkopf (4) mehr oder weniger in einer Senkung (3) im anderen Lappen des zweilappigen Gelenkteils

Wie in Bild 4 dargestellt nimmt mit Verkleinerung der Gelenkteile auch die Dicke der Lappen ab. Aus Festigkeitsgründen wird dann der Schraubenkopf nicht mehr versenkt, sondern aufgesetzt und die erforderliche Gewindelänge z. B. durch Ansetzen eines Kegelstumpfes (2) erreicht

Nachteilig an dieser gängigen Lösung ist die relativ geringe Festigkeit des mittleren Lappens (3) und die daraus resultierende Bruchgefahr.

Durch die WO 95/19586 ist ein Gelenk für eine Brillenfassung mit zwei Gelenkhälften bekannt Die Gelenkhälften haben jeweils eine Lauffläche, die normal auf die Gelenkachse steht. Eine Gelenkschraube dient zur Montage. Die Laufflächen der Gelenkhälften sind so ausgebildet, dass die radiale Positionierung der Gelenkhälften durch einen ringteilförmigen Formschluss erfolgt

Durch die DE 11 43 344 ist ein zylindrisches Brillenscharnier, das aus zwei übereinander gelegten, koaxialen, zylindrischen Elementen besteht, die sich um eine gemeinsame Achse drehen können, bekannt. Auf der Innenseite der beiden Elemente ist eine Aussparung, in der eine Feder in Form eines geteilten Ringes liegt. Aufgrund dieser Feder können die beiden Elemente um etwa 90° ungefedert und darüber hinaus um einen gewissen weiteren Winkel gefedert gegenseitig verdreht werden.

### Darstellung der Erfindung

Aufgabe der vorliegenden Erfindung ist es, ein ästhetisches Miniaturgelenk mit Gangregulierung zu schaffen, bei dem in jeder Stellung des Gelenks keinerlei Kanten vorstehen, bei dem der Schraubenkopf weitgehend versenkt ist, bei dem beide Gelenkhälften trotz Miniaturisierung eine vergleichbar gute Festigkeit aufweisen und das auch für Gelenkhälften aus Werkstoffen geeignet ist, die im Hinblick auf ein Kaltverschweißen der Gelenkhälften kritisch sind.

Diese Aufgabe wird erfindungsgemäß dadurch gelöst, dass zwischen die Laufflächen ein profiliertes Ringsegment eingelegt ist, das formschlüssig in zugeordnete Kavitäten der Gelenkhälften passt

Das vorgeschlagene Gelenk ist ein Miniaturgelenk für Brillenfassungen. Es weist keine vorstehenden Teile wie Schraubenkopf oder Anschlagflächen auf. Die exakte Positionierung der Gelenkhälften zueinander wird primär nicht durch eine Gelenkschraube sondern durch eine in die Laufflächen integrierte ringförmige Führung erzielt. Es ist möglich, die beiden Gelenkhälften weitgehend dimensionsgleich zu gestalten. Somit werden mechanische Belastungen von beiden Gelenkhälften gleichmäßig aufgenommen. Dadurch ist die Gefahr von Verformungen oder Materialbruch erheblich verringert. Weiterhin ist es möglich, dass der Formschluß auch einen Anschlag zur Begrenzung des Öffnungswinkels beinhaltet. Auf diese Weise ist der Anschlag im Gelenk verborgen und führt in keiner Winkelstellung des Gelenks zu hervorstehenden Teilen.

Bevorzugte Ausgestaltungen des vorgeschlagenen Gelenks sind in den Unteransprüchen angegeben.

Nachfolgend wird ein Ausführungsbeispiel des vorgeschlagenen Gelenks anhand von Zeichnungen beschrieben.

Es zeigen:
- Bild 5:: Ein Gelenk, bei der für den Formschluss die positve und negative Form einstückig aus der jeweiligen Gelenkhälfte herausgearbeitet sind
- Bild 6:: Eine Ausführungsform des vorgeschlagenen Gelenks, bei der zwischen die Gelenkhälften ein profiliertes Ringsegment eingelegt ist

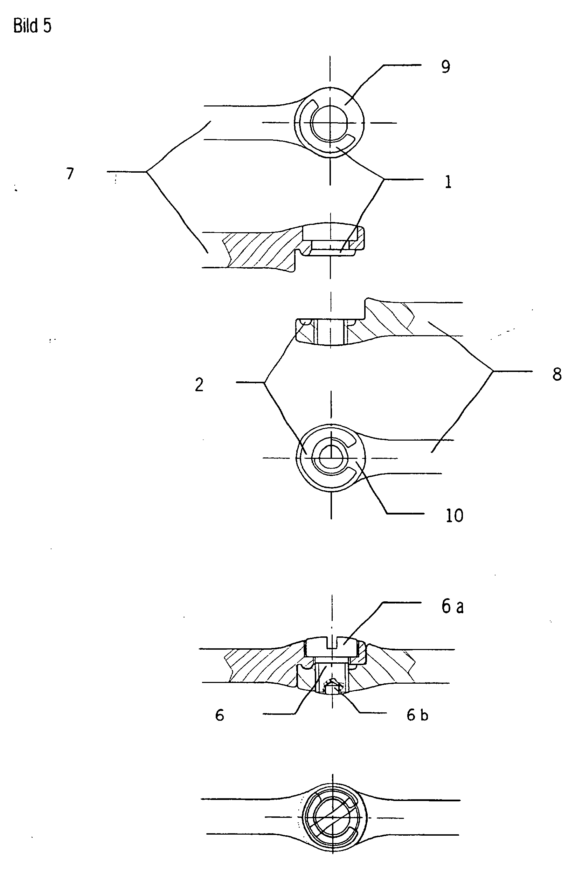

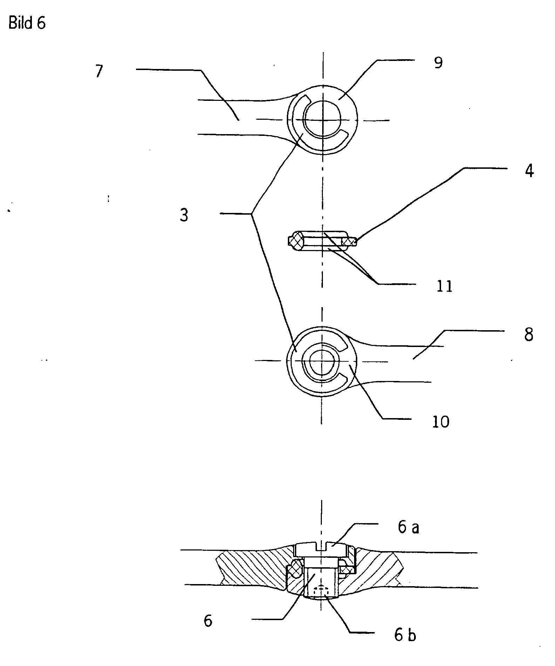

Das in Bild 5 dargestellte Gelenk ist so gestaltet, dass es aus zwei Gelenkhälften 7, 8 mit jeweils nur einem Lappen besteht. Das Gelenk ist aus den gelenkig zu verbindenden Bauteilen (Bügel und Gelenkbacke) herausgearbeitet. Durch die weitgehende Dimensionsgleichheit der Gelenkhälften 7, 8 werden mechanische Belastungen gleichmäßig von beiden Gelenkhälften aufgenommen und dadurch die Gefahr von unbeabsichtigten Verformungen oder gar Materialbruch erheblich verringert. Die Laufflächen 9, 10 der Gelenkhälften 7, 8 sind so ausgebildet, dass die axiale Positionierung der Gelenkhälften 7, 8 durch einen ringförmigen Formschluss erfolgt.
Dabei wird in der in Bild 5 dargestellten Variante aus der Lauffläche 9 der einen Gelenkhälfte 7 eine ringförmige Erhebung 1, aus der Lauffläche 10 der anderen Hälfte 8 eine entsprechende Vertiefung 2 herausgearbeitet.
In der in Bild 6 dargestelltenAusführungsform des vorgeschlagenen Gelenks weisen die Laufflächen 9, 10 beider Gelenkhälften 7, 8 eine entsprechende Vertiefung 3 auf. Der Formschluss wird in diesem Fall durch ein eingelegtes Formteil 4 erzeugt Das Formteil ist ein zwischen die Gelenkhälften 7, 8 eingelegtes, profiliertes Ringsegment 4 mit Erhebung 11, das formschlüssig in die zugeordneten Kavitäten 3 der Gelenkhälften 7, 8 passt. Diese Führung ist so ausgebildet, dass sie gleichzeitig eine Aufschlagbegrenzung bewirkt. Das Ringsegment 4 ist aus einer Scheibe herausgearbeitet. Im eingelegten Zustand verhindert das Ringsegment 4 eine direkte Berührung der Gelenklaufflächen 9, 10. Durch entsprechende Materialwahl kann auf diese Weise bei Gelenkhälften aus kritischen Werkstoffen ein Kaltverschweißen verhindert werden.

In beiden Fällen beinhaltet der Formschluss zugleich einen Anschlag zur Begrenzung des Öffnungswinkels. Ein wesentliches Merkmal der Erfindung ist folgendes: Betrachtet man den Zentriwinkel der ringförmigen Erhebung 11 einerseits und den Zentriwinkel der zugeordneten Kavitäten 3, so unterscheiden sich diese Winkel um ca. 90°. Unter Zentriwinkel wird der auf die Schwenkachse der Gelenkteile 7, 8 bezogene Winkelbereich verstanden, in dem sich die Erhebungen 11 bzw. die Kavitäten 3 erstrecken. Der Anschlag ist also im Gelenk verborgen und führt in keiner Winkelstellung zu hervorstehenden Teilen.

Die Schraube 6 dient erfindungsgemäß nicht als Achse, sondern zur Montage und zur Einstellung eines definierten Reibmoments zwischen den Laufflächen. Die erfindungsgemäße Gestaltung ermöglicht dabei ein weitgehendes Versenken des Schraubkopfes 6a in der oberen Gewindehälfte und ein so ausreichend dimensioniertes Gewinde in unteren Gelenkhälfte, dass sogar eine Gelenkschraube mit Bohrung 6b zur mechanischen Sicherung verwendet werden kann.

## Patentansprüche

1. Gelenk für eine Brillenfassung mit zwei Gelenkhälften (7, 8) mit jeweils einer Lauffläche (9, 10), die normal auf die Gelenkachse steht, sowie einer Schraube (6) zur Montage und Einstellung eines definierten Reibmoments, wobei die Laufflächen (9, 10) der Gelenkhälften (7, 8) so ausgebildet sind, dass die radiale Positionierung der Gelenkhälften (7, 8) durch einen ringteifförmigen Formschluss erfolgt, **dadurch gekennzeichnet, dass** zwischen die Laufflächen (9, 10) ein profiliertes Ringsegment (4) eingelegt ist, das formschlüssig in zugeordnete Kavitäten (3) der Gelenkhälften (7, 8) passt

2. Gelenk nach Anspruch 1, **dadurch gekennzeichnet, dass** das Ringsegment (4) aus einer Scheibe herausgearbeitet ist, die im eingelegten Zustand die direkte Berührung der Gelenklaufflächen (9, 10) verhindert.

3. Gelenk nach Anspruch 2, **dadurch gekennzeichnet, dass** das Ringsegment (4) aus einem Material besteht, das ein Kaltverschweißen der Gelenkhälften (7, 8) verhindert.

4. Gelenk nach einem der Ansprüche 1 bis 3, **dadurch gekennzeichnet, dass** beide Gelenkhälften (7, 8) einlappig ausgeführt sind.

5. Gelenk nach einem der Ansprüche 1 bis 4, **dadurch gekennzeichnet, dass** der ringförmige Formschluss so gestaltet ist, dass er zugleich die Schwenkbewegung begrenzt.

## Claims

1. Hinge for a spectacle frame with two hinge halves (7, 8) each with a bearing surface (9, 10), which stands perpendicular to the hinge axis, and also a screw (6) for assembly and adjustment of a defined frictional moment, wherein the bearing surfaces (9, 10) of the hinge halves (7, 8) are configured such that the radial positioning of the hinge halves (7, 8) is achieved by means of a ring section-shaped positive-locking arrangement, **characterised in that** a profiled ring segment (4), which fits positively into associated cavities (3) of the hinge halves (7, 8), is inserted between the bearing surfaces (9, 10).

2. Hinge according to Claim 1, **characterised in that** the ring segment (4) is worked from a disc, which in the inserted state prevents direct contact of the hinge bearing surfaces (9, 10).

3. Hinge according to Claim 2, **characterised in that** the ring segment (4) is made of a material, which prevents cold-bonding of the hinge halves (7, 8).

4. Hinge according to one of Claims 1 to 3, **characterised in that** the two hinge halves (7, 8) are single-strapped.

5. Hinge according to one of Claims 1 to 4, **characterised in that** the ring-shaped positive-locking arrangement is configured such that it at the same time restricts the pivoting movement.

## Revendications

1. Charnière destinée à une monture de lunettes avec deux moitiés de charnière (7, 8) comportant respectivement une surface de portée (9, 10), qui est perpendiculaire à l'axe d'articulation, ainsi qu'une vis (6) servant au montage et au réglage d'un moment de frottement défini, dans laquelle les surfaces de portée (9, 10) des moitiés de charnière (7, 8) sont réalisées de sorte que le positionnement radial des moitiés de charnière (7, 8) s'effectue par une correspondance de forme annulaire, **caractérisée en ce qu'**un segment annulaire profilé (4) qui s'adapte par correspondance de forme dans des cavités associées (3) des moitiés de charnière (7, 8), est inséré entre les surfaces de portée (9, 10).

2. Charnière selon la revendication 1, **caractérisée en ce que** le segment annulaire (4) est façonné à partir d'une rondelle qui empêche, à l'état inséré, le contact direct des surfaces de portée de la charnière (9, 10).

3. Charnière selon la revendication 2, **caractérisée en ce que** le segment annulaire (4) est en un matériau qui empêche un soudage à froid des moitiés de charnière (7, 8).

4. Charnière selon l'une quelconque des revendications 1 à 3, **caractérisée en ce que** les deux moitiés de charnière (7, 8) sont réalisées en une lame.

5. Charnière selon l'une quelconque des revendications 1 à 4, **caractérisée en ce que** la correspondance de forme annulaire est réalisée de sorte à limiter en même temps le mouvement pivotant.
